# EUROPEAN PATENT APPLICATION

(11) **EP 4 838 448 A1**
(43) Date of publication of application: **11.11.2026**
(21) Application number: 25224645.9
(22) Date of filing: 17.12.2025
(51) Int. Cl.: G06Q 30/0242, G06Q 30/0241

(54) **PREDICTING CONVERSION DATA IN COMPUTER-GENERATED RECOMMENDATIONS**

(30) Priority: 09.05.2025 US 202519204072
(71) Applicant: Bytedance Technology Ltd., KY1 - 1205 Grand Cayman Cayman Islands (KY)
(72) Inventor: Pan, Haobin, Los Angeles (US); Zhang, Qi, Beijing (CN)
(74) Representative: Marks & Clerk LLP

(57) **Abstract**

Methods, systems, and apparatus for predicting conversion in recommendation. One example method comprises: receiving feature data of a first number of recommendations; predicting return times for the first number of recommendations by utilizing a trained return time model based on the feature data; determining a second number of recommendations from the first number of recommendations based on the return times, wherein each of the second number of recommendations has a return time within a first time period; determining a bias based on the first number of recommendations and the second number of recommendations; determining, based on the bias, a calibrated conversion metric for at least one of the first number of recommendations within a predefined time period, wherein the predefined time period is different from the first time period; and adjusting a recommendation strategy for the first number of recommendations based on the calibrated conversion metric.

## Description

### TECHNICAL FIELD

This specification relates to predicting conversion data of computer-generated recommendations.

### BACKGROUND

A recommendation service provider or platform can use artificial intelligence (AI) or machine learning models trained on training data to generate recommendations for goods and/or services provided to users. A conversion rate or other statistics of generated recommendations are important metrics for recommendation service platforms.

### SUMMARY

This specification describes technologies for predicting conversion data of computer-generated recommendations.

According to a first aspect, a computer-implemented method is provided. The method includes: receiving feature data of a first number of recommendations; predicting return times for the first number of recommendations by utilizing a trained return time model based on the feature data; determining a second number of recommendations from the first number of recommendations based on the return times, wherein each of the second number of recommendations has a return time within a first time period; determining a bias based on the first number of recommendations and the second number of recommendations; determining, based on the bias, a calibrated conversion metric for at least one of the first number of recommendations within a predefined time period, wherein the predefined time period is different from the first time period; and adjusting a recommendation strategy for the first number of recommendations based on the calibrated conversion metric.

With reference to the first aspect, in some implementations, the recommendation strategy includes at least one of: a ranking strategy, a billing strategy, or a bidding strategy.

With reference to the first aspect, in some implementations, the method further includes: determining a third number of recommendations from the first number of recommendations, wherein each of the third number of recommendations has a return time within a second time period, the second time period is longer than and covers the first time period; determining an updated bias based on the first number of recommendations and the third number of recommendations; updating the calibrated conversion metric with the updated bias; and adjusting the recommendation strategy for the first number of recommendations based on the updated calibrated conversion metric.

With reference to the first aspect, in some implementations, the feature data includes features corresponding to at least one of: an identity of the recommendation, an identity of a provider of the recommendation, a category of the recommendation, a placement time slot for the recommendation, a geographic location corresponding to the recommendation, or a platform for placing the recommendation.

With reference to the first aspect, in some implementations, the trained return time model is generated by performing operations including: obtaining a set of training data from past recommendations, wherein the set of training data including feature data of the past recommendations, first data related to times of placing the past recommendations, and second data related to return times of the past recommendations; performing a binning operation on the set of the training data to obtain a discrete return time distribution; inputting the feature data of the past recommendations and the discrete return time distribution to a neural network model; and training the neural network model to obtain the trained return time model.

With reference to the first aspect, in some implementations, the neural network model is trained with softmax and cross-entropy loss function.

With reference to the first aspect, in some implementations, performing a binning operation on the set of the training data to obtain a discrete return time distribution includes:

obtaining return time samples based on differences between the first data and the second data; and performing the binning operation on the return time samples to divide the return time samples into a predetermined number of time intervals, so as to obtain the discrete return time distribution.

With reference to the first aspect, in some implementations, predicting return times for the first number of recommendations by utilizing a trained return time model based on the feature data includes, for each of the first number of recommendations: inputting feature data of the each of the first number of recommendations to the trained return time model to obtain a return time distribution of the each of the first number of recommendations, wherein the return time distribution includes probabilities of return times falling into different time intervals; and performing a sampling operation on a random process according to the return time distribution to obtain a respective return time of the each of the first number of recommendations.

With reference to the first aspect, in some implementations, determining a bias based on the first number of recommendations and the second number of recommendations includes: determining the bias as a ratio of the first number of recommendations divided by the second number of recommendations.

With reference to the first aspect, in some implementations, determining, based on the bias, a calibrated conversion metric for at least one of the first number of recommendations within a predefined time period includes: determining a predicted conversion metric for each of the first number of recommendations within the predefined time period; determining an expected conversion of the first number of recommendations within the predefined time period based on a summation of a predicted conversion metric for each of the first number of recommendations; determining an actual conversion of the first number of recommendations within the first time period based on recommendations that have actual return times within the first time period; determining a calibration term based on the bias, the expected conversion of the first number of recommendations within the predefined time period, and the actual conversion of the first number of recommendations within the first time period; and determining the calibrated conversion metric based on a weighted summation of a predicted conversion metric for the at least one of the first number of recommendations within the predefined time period and the calibration term. In some implementations, adjusting a recommendation strategy for the first number of recommendations based on the calibrated conversion metric includes: adjusting the recommendation strategy for the first number of recommendations based on the weighted summation of the predicted conversion metric for the at least one of the first number of recommendations within the predefined time period and the calibration term.

According to a second aspect, one or more computer-readable storage media is provided. The one or more computer-readable storage media stores one or more instructions that, when executable by one or more computers, cause the one or more computers to perform the method according to the first aspect or one or more implementations of the first aspect.

According to a third aspect, a computer-implemented system is provided. The computer-implemented system includes one or more computers and one or more computer memory devices interoperably coupled with the one or more computers. The one or more computer memory devices have computer-readable storage media storing one or more instructions that, when executed by the one or more computers, perform the method according to the first aspect or one or more implementations of the first aspect.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG.1 illustrates an example diagram of a system for predicting conversion data of computer-generated recommendations.
FIG.2 illustrates an example process for generating a trained return time model.
FIG. 3 illustrates an example process for predicting conversion data of computer-generated recommendations.
FIG. 4 is an example computing system.

Like reference numbers and designations in the various drawings indicate like elements.

### DETAILED DESCRIPTION

A recommendation service provider or platform provides recommendation services to one or more product providers by presenting recommendations of goods, services, or other products of the one or more product providers to users or potential customers of the one or more product providers. The recommendation service platform can use machine learning or artificial intelligence (AI) models to provide computer-generated recommendations to the users. An example recommendation of a product of a product provider can include an advertisement of the product of the product provider, and the product provider can be an advertiser. In some implementations, a recommendation service platform can use one or more AI models to recommend and present targeted advertisements to target users.

A conversion can refer to a specified action taken by a user after interacting with a recommendation presented to the user by the service recommendation platform. The specified action can include one or more of, for example, making a purchase, signing up for an email list, installing an app, or adding payment methods that are beneficial or potentially profitable to the product provider. A recommendation followed by a conversion can be referred to as a converted recommendation. Conversion data or statistics can include one or more metrics that characterize converted recommendations relative to presented recommendations. Conversion data is useful for evaluating the effectiveness of the AI models and overall recommendation strategies of the recommendation service platform.

In some implementations, the recommendation service platforms can use several metrics of the conversion data, for example, a click-through rate (CTR), a conversion rate (CVR) and a predicted view-through rate (PVR), to quantify the performance of recommendations, which can facilitate determining recommendation strategies such as bidding and billing strategy for recommendation services (e.g., advertising). Typically, the conversion metrics are associated with a predetermined time period (e.g., a week, 10 days, or another period). For example, the click-through rate measures a ratio (e.g., a percentage) of users who click on a recommendation within the predetermined time period after seeing it. The conversion rate measures a ratio (e.g., a percentage) of users who complete a conversion action out of the total number of clicks within the predetermined time period. The predicted view-through rate measures a ratio (e.g., a percentage) of users who see a recommendation and later complete a conversion action within the predetermined time period without clicking on the recommendation. In some implementations the predicted view-through rate can be calculated based on the click-through rate and the conversion rate as follows: $PVR = CTR \times CVR$ (1)

Based on these metrics, the platforms can use the click-through rate and the conversion rate to estimate the predicted view-through rate, thereby learning the indirect influence of the recommendations. By analyzing these metrics, the recommendation service platforms can optimize or otherwise improve recommendation delivery or presentation algorithms or strategies to enhance recommendation efficacy, so as to improve conversion in recommendation services provided to the product providers (e.g., the advertisers).

There are several ways to calculate the predicted view-through rate. In some implementations, the platforms can estimate both the click-through rate and the conversion rate using a machine-learning model and then obtain an estimated predicted view-through rate (hereinafter "estimated PVR") using the following equation (2). $Estimated PVR = Estimated CTR \times Estimated CVR$ (2) In some other implementations, the platforms can obtain an actual predicted view-through rate by measuring the actual click-through rate and the actual conversion rate. The following equation (3) can be used to calculate the actual predicted view-through rate (hereinafter "actual PVR"). $Actual PVR = Actual CTR \times Actual CVR$ (3)

To achieve accurate recommendation, it is desirable for the platforms to minimize the difference between the estimated PVR and the actual PVR. In some implementations, a bias parameter can be introduced to characterize the difference between the estimated PVR and the actual PVR. In some implementations, the bias parameter is defined as a ratio obtained by dividing the actual PVR by the estimated PVR. The closer the value of the bias parameter is to 1, the more accurate the estimated PVR is. In some implementations, the platforms can also use the actual PVR to correct the estimated PVR obtained from the machine-learning model to dynamically adjust the recommendation strategy.

In some implementations, it may take a long time for the platforms to obtain the actual conversion data. For example, a return time of a recommendation (i.e., the time from the display or other presentation of the recommendation to the occurrence of an actual conversion of the recommendation) may be very long and may even be delayed by several days. In this case, the platforms cannot determine the actual PVR in time, and thereby the estimated PVR cannot be corrected in time.

One example method for correcting the estimated PVR is to correct the estimated PVR generated by the machine-learning model based on statistical parameters of global data. In some implementations, global data refers to all data corresponding to the recommendations across the whole cycle or prediction period of the recommendations. For example, the method includes: (1) collecting historical posterior data, that is, collecting data of actual conversions within a defined time period, and calculating a bias parameter (e.g., systematic deviation) by comparing data of predicted conversion estimated by the machine-learning model with the collected data of actual conversion; and (2) calibrating based on statistical parameters of the global data, that is, determining a ratio for the systematic deviation between data of predicted conversion and data of actual conversion based on the global data within the defined time period, and performing an overall calibration (e.g., performing a uniform linear scaling) on the data of predicted conversion estimated by the machine-learning model. Such a method can alleviate the problem of prediction deviation caused by the delay of the return time of the recommendations to a certain extent, but cannot optimize the conversion prediction of individual product providers (e.g., advertisers) since the adjustment is made based on the global data without considering differences among different advertisers or user groups targeted by different recommendations. In addition, the method has limited timeliness. For example, for the types of recommendations with an obvious trend fluctuation over time, the calibration accuracy may decay over time.

Techniques described in this disclosure provide an improved method for predicting conversion data in product recommendation. For example, predicting conversion data can include calibrating a conversion metric with a predetermined time period (e.g., the estimated PVR with a prediction period of seven days) at an earlier time (e.g., two days) before the predetermined time period ends, so that the actual conversion data before or at a specified time period (e.g., two days) can be used to improve the prediction accuracy. In some implementations, the calibration can be performed dynamically, periodically, or at a specified time from time to time, to improve the predicted conversion data or on an on-going basis.

In some implementations, a calibration metric (referred to as a bias) can be calculated to calibrate the conversion metric. The bias can be based on the number of total recommendations subject to the prediction (e.g., to estimate the PVR within seven days) and the number of total recommendations predicted to convert within the specified time period (e.g., the number of recommendations predicted to convert within two days).

In some implementations, the described techniques leverage return time data that reflect time of conversion of recommendations to calculate the bias and to improve the prediction accuracy. In some implementations, the return time refers to a time duration or difference between a time when a conversion of a recommendation occurs and a time when the recommendation is placed or provided to a user (e.g., displayed to a user on an app of a phone). The return time can be used to determine the number of recommendations predicted to convert within a specified time period (e.g., two days), for example, by determining recommendations with predicted return times being less than or equal to the specified time period.

In an example method, sample data of converted recommendations are collected and used to train a return time model. In some implementations, the sample data include feature data of the converted recommendations and respective return times of the converted recommendations. The trained return time model can be used to predict a return time of an input recommendation. For example, feature data of a first number of recommendations are received. Return times for the first number of recommendations are predicted by utilizing a trained return time model based on the feature data. A second number of recommendations is then determined based on the return times, wherein each of the second number of recommendations has a return time within a first time period. In some implementations, a bias is determined based on the first number of recommendations and the second number of recommendations. The bias is then used to determine a calibrated conversion metric for at least one of the first number of recommendations within a predefined time period. In some implementations, a recommendation strategy for the first number of recommendations is adjusted based on the calibrated conversion metric.

The described techniques can achieve one or more technical benefits/advantages. In some implementations, the described techniques can reduce time for obtaining the bias for calibrating the predicted conversion metric of recommendations. For example, by utilizing a trained return time model to predict return times for recommendations, the predicted return times for recommendations can be determined in a short time accurately. Thereby, the bias for calibrating the predicted conversion metric of the recommendations, which is determined on the basis of the predicted return times for recommendations, can also be determined efficiently and accurately. In some implementations, the described techniques can achieve personalized calibration of the predicted conversion metric of recommendations. For example, the return times for recommendations are predicted by a return time model trained (such as based on supervised learning) with feature data such as features of the recommendations (e.g., advertiser of the recommendations, categories of the recommendations, and the like) and features of the users (e.g., the users who click on the recommendations, the users who complete a conversion action corresponding to the recommendations). In this case, the prediction can be adaptively adjusted for different advertisers or user groups targeted by different recommendations, which is beneficial to overcome the limitations caused by calibrating based on statistical parameters of global data. In some implementations, the described techniques do not rely on statistical parameters of global data to calibrate the estimated PVR. Instead, by using the return time model, the described techniques can determine a bias for current conversion metric of recommendations, so as to dynamically correct the estimated PVR. In some implementations, different or additional advantages can be achieved.

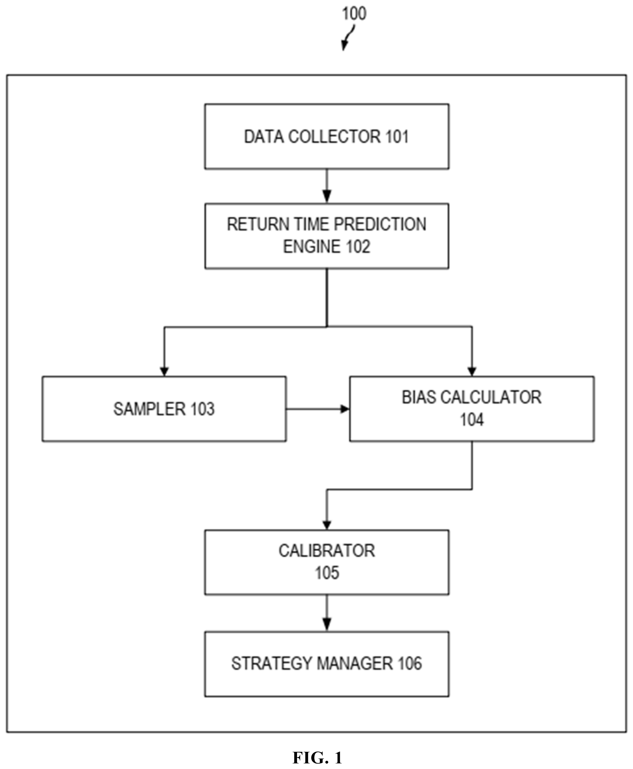

FIG.1 illustrates an example diagram of a system 100 for predicting conversion in recommendations. In some implementations, the system 100 can be implemented by a recommendation service platform that provides recommendation services to one or more product providers. The platform can generate and present recommendations (e.g., computer-generated, digital recommendations such as advertisements) to one or more users, for example, through an app, a website, or another user interface on an electronic device. The users can be potential customers of the product providers (e.g., advertisers). The recommendation service platform include, for example, a social network platform, an e-commerce platform, or another internet platform.

Referring to FIG.1, the system 100 includes a data collector 101, a return time prediction engine 102, a sampler 103, a bias calculator 104, a calibrator 105, and a strategy manager 106. In some implementations, two or more of the aforementioned components can be integrated into one component. In some other implementations, the system 100 can also include additional or different components or subsystems.

In some implementations, the data collector 101 is configured to collect data and perform data cleaning and feature extraction. For example, the data collector 101 is configured to collect data corresponding to recommendations, clean the collected data, and extract features from the cleaned data. For example, the data collector 101 collects data corresponding to delivery and conversion of the recommendations, such as delivery time of the recommendations and conversion occurrence time of the recommendations. In some implementations, the data collector 101 cleans the collected data by filtering data that is obviously inconsistent with common sense or lacks a large number of key fields, so as to remove abnormal data from the collected data. In some implementations, the data collector 101 extracts feature data that can affect or otherwise are related to the conversion metric of the recommendations from the collected data. The feature data may include, for example, an identity of the recommendation, an identity of a provider of the recommendation, a category of the recommendation, a placement time slot for the recommendation, a geographic location corresponding to the recommendation, or a platform for placing the recommendation. In some implementations, the collected data and the extracted feature data are then sent to the return time prediction engine 102.

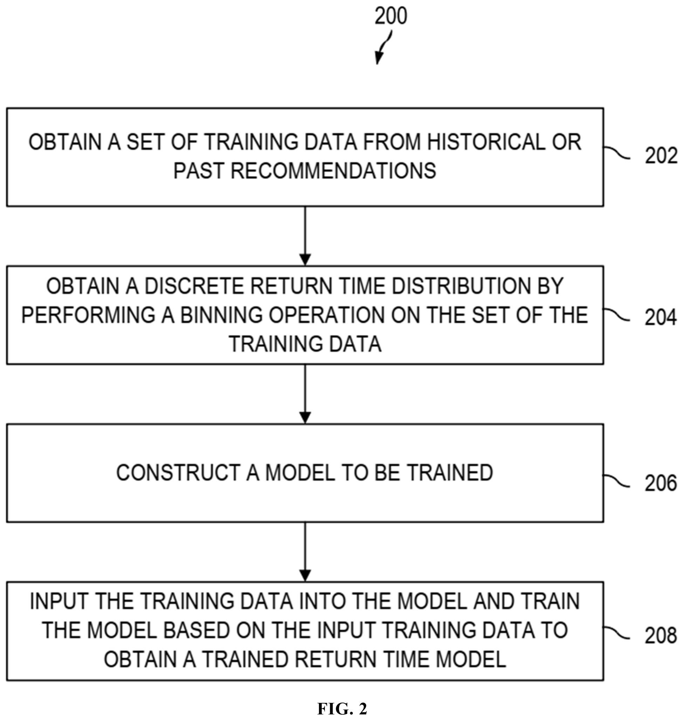

In some implementations, the return time prediction engine 102 is configured to predict return time statistics for the recommendations, for example, using with a trained return time model. In particular, the return time prediction engine 102 is configured to input the feature data received from the data collector 101 into the trained return time model and to output the predicted return time statistics from the trained return time model. In some implementations, the return time statistics can include a probability distribution of the return time (e.g., a discrete or a continuation distribution). A process of training the return time model will be described below with reference to FIG. 2. In some implementations, the output predicted return times are sent to the sampler 103.

In some implementations, the sampler 103 is configured to perform sampling based on the output predicted return time statistics received from the return time prediction engine 102. As an example, the sampler 103 generates a random process that follows the predicted return time statistics (e.g., the probability distribution of the return time) and performs sampling from the random process to obtain return time samples. The return time samples can fall within respective specific time periods.

In some implementations, the bias calculator 104 is configured to calculate a bias for calibrating a predicted conversion metric of recommendations. For example, the bias calculator 104 determines the bias based on a first number of recommendations whose return times are predicted by the return time prediction engine 102 and a second number of recommendations obtained by the sampler 103. In some implementations, the bias is then sent from the bias calibrator 104 to the calibrator 105 for calibrating the predicted conversion metric (such as the estimated PVR) of recommendations.

In some implementations, the calibrator 105 is configured to, for example, dynamically calibrate the predicted conversion metric (e.g., an PVR) of the recommendations based on the bias determined in the bias calibrator 104. For example, the calibrator 105 determines an estimated PVR of a recommendation based on the estimated CTR and the estimated CVR of the recommendation, and then calibrates the estimated PVR of the recommendation with the bias received from the bias calibrator 104.

In some implementations, the calibrator 105 further calibrates the estimated PVR of the recommendation with current actual conversion of the recommendations, so as to improve the accuracy of the calibration of the estimated PVR. For example, the calibrator 105 determines an actual conversion based on recommendations having actual return times within a first time period and determines a summation of a predicted conversion metric based on the first number of recommendations, and calibrates the estimated PVR of the recommendation with the actual conversion and the summation of the predicted conversion metric. In some implementations, the calibrated estimated PVR can then be used to determine, for example, recommendation strategy, bidding and billing strategy, etc.

In some implementations, the strategy manager 106 is configured to determine recommendation strategies based on the calibrated estimated PVR obtained in the calibrator 105. For example, the strategy manager 106 can design, generate, modify, adjust, determine or otherwise manage the recommendation strategies including such as a ranking strategy, a billing strategy, and a bidding strategy for the recommendations based on the calibrated estimated PVR. In some implementations, the strategy manager 106 also adjusts the future placement of the recommendations based on the calibrated predicted conversion metric (e.g., the estimated PVR).

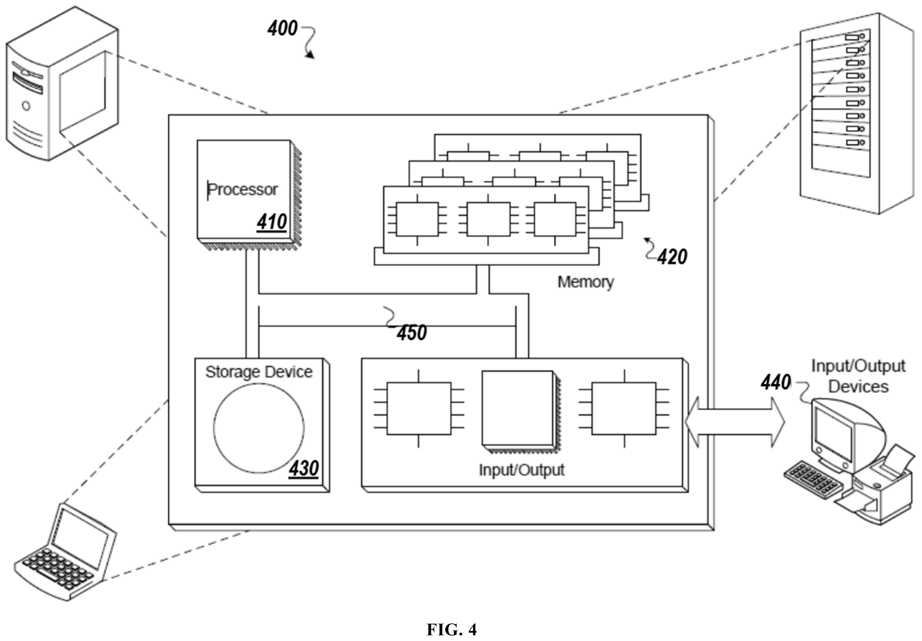

FIG.2 illustrates an example process 200 for generating a trained return time model for predicting a return time of a recommendation. In some implementations, the process 200 can be performed by a data processing apparatus or a system (e.g., the system 100 shown in FIG. 1 or the system 400 shown in FIG. 4), located in one or more locations, and programmed appropriately in accordance with this specification. Further, some of the operations may be omitted, or performed simultaneously or in a different order than shown in FIG. 2. In some implementations, the process 200 can be performed by one of the components (e.g., return time prediction engine 102) shown in system 100 in FIG. 1, or be performed by a separate system that provides the trained return time model to the return time prediction engine 102 of the system 100 shown in FIG. 1.

At 202, a set of training data from historical or past recommendations is obtained. In some implementations, the set of training data includes first data related to the times of placing the past recommendations, and second data related to the return times of the past recommendations. For example, the set of training data includes may include delivery or display time (*feature_ts*) of the past recommendations and conversion occurrence time (*convert_ts*) of the past recommendations. In some implementations, the time difference between the delivery time and the conversion occurrence time of a recommendation (i.e., *convert_ts - feature_ts*) can be input as a sample of return time to the model for training. In some implementations, the set of training data also includes feature data of the past recommendations. For example, the set of training data includes, for each of the past recommendations, the identity of the recommendation, the identity of the provider of the recommendation, the category of the recommendation, the placement time slot for the recommendation, the geographic location corresponding to the recommendation, and the platform (or the operation system) for placing the recommendation. In some implementations, the set of training data is cleaned before being input into the model for training, so as to ensure the accuracy and consistency of the training data.

At 204, a discrete return time distribution is obtained by performing a binning operation on the set of the training data. In some implementations, the binning operation is performed on the return times (e.g., time differences (*convert_ts - feature_ts*)) obtained based on the past recommendations. For example, the return times can be divided into time intervals (also referred to as buckets). As an example, the return times can be divided into a number of buckets (e.g., 252 buckets). Each bucket corresponds to a discrete time interval and represents a range of the return time of the recommendation.

At 206, a model to be trained is constructed. In some implementations, the model to be trained can be any suitable machine learning or AI model. As an example, the model can be a neural network model. For example, the neural network model includes an embedding layer, a concatenation (concat) layer and a neural network tower layer (such as Multilayer Perceptron (MLP) layer), and a softmax output layer. In some implementations, the embedding layer embeds the input features to reduce the influence of high-dimensional sparse features. For example, the embedding layer may convert the high-dimensional sparse features into low-dimensional continuous vector. In some implementations, the concat layer integrates heterogeneous features, for example, by concating embedding vectors of different features with deviation vectors, thereby enriching information of the input features for the model. In some implementations, the neural network tower layer adopts a multilayer fully connected neural network to enhance the nonlinear modeling ability of the model. For example, the multilayer fully connected neural network may include two hidden layers with 128 and 256 neurons respectively. In some implementations, the softmax output layer is constructed to output, for example, a 252-dimensional probability distribution to represent the probability that the return time falls in each bucket.

At 208, a trained return time model is obtained by inputting the training data into the model constructed at 206 and training the model based on the input training data to generate return time statistics (e.g., the discrete return time distribution) based on feature data of input recommendations. In some implementations, the feature data of the past recommendations, together with the corresponding discrete return time distribution that are used as labels, are input into the neural network model. The softmax and cross-entropy (softmax _cross_entropy) loss function are used as the loss function to compare and optimize the return time distribution predicted by the neural network model with the actual label of the buckets. In some implementations, by using the training data obtained from past recommendations, the neural network model learns a probability distribution of conversion times of different recommendations. In this case, the obtained trained return time model can predict the return time distribution for new samples (i.e., new recommendations). In some implementations, by using the trained model to predict the distribution of return times, the prediction capability can be improved for personalized or customized recommendations and recommendations in different scenes or settings.

In some implementations, by training an AI model with features of historical recommendations to obtain a return time model and using the trained return time model to predict the return time distribution of recommendations, the predicted return time distribution does not rely on a specific distribution (such as exponential distribution and gamma distribution). Thus, the trained return time model can effectively and flexibly predict return time distribution of different recommendations.

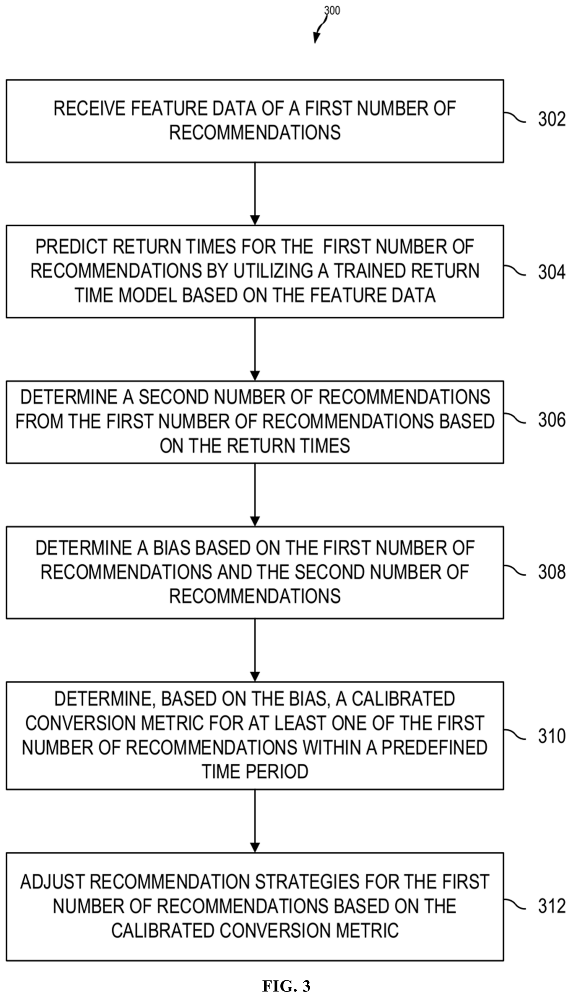

FIG. 3 illustrates an example process 300 for predicting conversion data in recommendations. For convenience, the process 300 will be described as being performed by a system (e.g., the system 100 shown in FIG. 1 or the system 400 shown in FIG. 4), located in one or more locations, and programmed appropriately in accordance with this specification. Further, some of the operations may be omitted, or performed simultaneously or in a different order than shown in FIG. 3.

At 302, feature data of a first number of recommendations is received. In some implementations, the system 100 receives, at the data collector 101, feature data of a first number of recommendations. For example, the system 100 receives feature data of N recommendations, where N is an inter larger than 1. In some implementations, the feature data of the recommendation includes, for example, an identity of the recommendation, an identity of a provider of the recommendation, a category of the recommendation, a placement time slot for the recommendation, a geographic location corresponding to the recommendation, or a platform for placing the recommendation.

At 304, return times for the first number of recommendations are predicated by utilizing a trained return time model based on the feature data. In some implementations, the system 100 inputs, at the return time prediction engine 102, the feature data into the trained return time model and predicts the return times for the first number of recommendations. For example, for each of the first number of recommendations, the system 100 inputs respective feature data of the recommendation to the trained return time model and obtains a return time distribution of that recommendation. The return time distribution represents probabilities of the return time of the recommendation falling into different time intervals (e.g., 252 time intervals in the above-described example or another number of time intervals). In the example that the system 100 receives feature data of N recommendations, for each of the N recommendations, the system 100 inputs feature data of the recommendation to the trained return time model and obtains a return time distribution of that recommendation. In this case, the system 100 obtains N return time distributions corresponding to the N recommendations, respectively. In some implementations, the trained return time model can be an AI model trained according to the example process 200 of FIG. 2.

In some implementations, in response to determining the return time distributions of the first number of recommendations based on the output of the trained return time model, the system 100 determines a respective return time for each of the first number of recommendations, for example, by performing a sampling operation. For example, for each of the first number of recommendations, the system 100 performs, at the sampler 103, a sampling operation on a random process according to the respective return time distribution to obtain a respective return time of the recommendation. For example, the system 100 performs a sampling operation on a random process according to the N return time distributions and obtains N return times of the N recommendations.

In some implementations, the process 300 of predicting conversion data in recommendations includes calibrating a conversion metric associated with a predefined time period, for example, based on recommendations whose predicted conversion times are before or at a specified time instance or point (e.g., the current time point) earlier than the predefined time period ends. In the words, the calibrating can use recommendations whose return times is less than or equal to a specified time period (referred to a first time period (e.g., two days)) to update the conversion metric, and adjust recommendation strategies according to the updated conversion metric in a more timely manner.

At 306, a second number of recommendations are determined from the first number of recommendations based on the return times predicted at 304. In some implementation, the system 100 determines a second number of recommendations from the first number of recommendations based on the return times, where each of the second number of recommendations has a return time within a first time period. For example, the system 100 may determine M recommendations from the N recommendations based on their predicted return times, where each of the M recommendations has a return time within a first time period (e.g., two days). M is an integer larger than 0 and smaller than N.

At 308, a bias is determined based on the first number of recommendations and the second number of recommendations. In some implementations, the first number of recommendations indicate a total number of recommendations placed or displayed to users, and the second number of recommendations indicate a total number of recommendations having a return time within a first time period (such as before or at the current time point). In some implementations, the system 100 determines, at the bias calculator 104, the bias as a ratio of the first number of recommendations divided by the second number of recommendations, such as equation (4): $bias = \frac{a total number of recommendations displayed to the user groups}{a number of recommendations having a return time before or at the current time point}$ (4) In the above example that the system 100 receives feature data of N recommendations, the first number of recommendations (i.e., a total number of recommendations displayed to the users) is N, and the second number of recommendations (i.e., a number of recommendations having a return time before the first time period (e.g., within two days)) is M. In this case, the bias is $\frac{N}{M}$.

At 310, a calibrated conversion metric for at least one of the first number of recommendations within a predefined time period is determined based on the bias. In some implementations, the system 100 determines, at the calibrator 105 and based on the bias, the calibrated conversion metric for at least one of the first number of recommendations within a predefined time period. The calibrated conversion metric is associated with the predefined time period because the predefined time period determines a total time span for the conversion in recommendation to be predicted. In some implementations, the predefined time period can also be referred to a predefined prediction period. For example, a platform can predict a conversion metric of recommendations within a week, 10 days, or other time period. As an example, the predefined time period is one week (i.e., seven days). The bias, as afore mentioned, is determined based on recommendations having a return time less than the first time period (e.g., two days). In some implementations, the first time period is less than the predefined time period so that the conversion metric can be calibrated earlier and more timely to provide more accurate prediction. In some implementations, the calibration can be performed dynamically (e.g., every day, every other day, periodically or at a specified time intervals).

In some implementations, the first time period is set relative to a specified time point (e.g., the current time point when the calibration is performed) such that the system 100 can collect and use actual converted recommendations collected before or at specified time point for calibration. For example, the first time period can be set to two days before the current time point, whereas the predefined time period is seven days. In this example, the bias may be determined based on recommendations having a return time within the first two days of the seven days. Therefore, by using the bias calculated based on the current time point to calibrate the predicted conversion metric of the predefined time period that ends after the current time point, the techniques described can adjust the predicted conversion metric of the recommendations based on actual conversion data, making the prediction more accurate.

In some implementations, in order to determine a calibrated conversion metric for one of the first number of recommendations, a predicted conversion metric of the one of the first number of recommendations within the predefined time period is first determined, for example, based on techniques for determining the PVR, as discussed above with respective to equations (1)-(3). For example, the system 100 determines, at the calibrator 105, an estimated predicted view-through rate of one of the N recommendations within seven days. In some implementations, an expected amount of the first number of recommendations converted within the predefined time period is determined based on a summation of a predicted conversion metric for each of the first number of recommendations. For example, the system 100 determines an expected amount of the N recommendations converted within seven days based on a summation of the estimated predicted view-through rate for each of the N recommendations. As an example, if there are 1000 recommendations, and each of the 1000 recommendations has an estimated predicted view-through rate of 1%, a summation of the estimated predicted view-through rate for each of the 1000 recommendations is 10. That is, the expected amount of the 1000 recommendations converted within seven days is 10. In other words, there are 10 recommendations that are expected to be converted within seven days.

In some implementations, an actual conversion of the first number of recommendations within the first time period is determined based on recommendations that have actual return times within the first time period. For example, the system 100 determines, at the calibrator 105, an actual conversion of the N recommendations based on recommendations that have actual return times within the first two days. As an example, there are 6 recommendations that have actual return times within the first two days. Then the actual conversion of the 1000 recommendations is 6.

In some implementations, a calibration term is determined based on the bias, the expected conversion of the first number of recommendations within the predefined time period, and the actual conversion of the first number of recommendations within the first time period. For example, the system 100 determines, at the calibrator 105, a calibration term based on the bias determined at the bias calculator 104, the number of the recommendations that are expected to be converted within seven days, and the number of recommendations that have actual return times within the first two days. In some implementations, the calibrated conversion metric is determined based on a weighted summation of a predicted conversion metric for the at least one of the first number of recommendations within the predefined time period and the calibration term. For example, the system 100 determines, at the calibrator 105, the calibrated PVR based on a weighted summation of a PVR for the at least one of the N recommendations within seven days and the calibration term determined above.

In some implementations, an example equation for determining the calibrated PVR (*pvr*') of a recommendation can be expressed as follows. $pvr ′ = pvr \times \left(1-scale\right) + pvr \times scale \times \frac{bias \times convert}{\sum epvr}$ (5) where the *pvr* indicates an estimated predicted view-through rate (estimated PVR) of a recommendation. In some immolations, the *pvr* can be calculated for each of the first number of recommendations, for example, using a machine-learning model and/or based on the techniques described above. For example, the *pvr* can be calculated by determining an estimated click-through rate (estimated CTR) of the recommendation and an estimated conversion rate (estimated CVR) of the recommendation using the machine-learning model, and determining a product of the estimated click-through rate and the estimated conversion rate as the *pvr.* The *scale* can be a hyperparameter or another configurable parameter. In some implementations, the value of the *scale* can be, for example, 0.8. The *bias* is determined at 308, for example, according to equation (4). The $\frac{convert}{\sum epvr}$ is a correction term used to enlarge or reduce the *pvr* to adapt to the actual data. In some implementations, the *convert* represents a total number of recommendations actually converted within the first time period, and the Σ *epvr* is a total number of recommendations that are expected to be converted within the predefined time period. For example, the Σ *epvr* is a total number of recommendations that are expected to be converted within seven days and the *convert* is a total number of recommendations that are actually converted within the first two days of the seven days. In other words, the *convert* is obtained based on actual situations.

In some implementations, the calibration step 310 is performed only for the recommendations that are actually converted within the first time period. By determining the bias based on the recommendation having a predicted return time within the first time period before or at the specified time point (e.g., the current time point) and calibrating, based on the bias, the conversion metric only for the recommendations that are already converted within the first time period, the described techniques avoids blindly processing of recommendations that have not been converted.

At 312, one or more recommendation strategies for the first number of recommendations are adjusted based on the calibrated conversion metric. The calibrated conversion metric (such as the calibrated PVR) can be regarded as one of the key indicators for determining such as the biding, ranking and billing of the recommendations, so as to select recommendations with the most conversion value for priority display. For example, the one or more recommendation strategies may include a ranking strategy, a billing strategy (or a pricing strategy), and a bidding strategy. In some implementations, the system 100 adjusts, at the strategy manager 106, one or more of the ranking strategy, the billing strategy, and the bidding strategy for the N recommendations based on the calibrated conversion metric. In some implementations, the calibrated conversion metric may also be used to determine the further placement strategy of the recommendations. For example, if the calibrated conversion metric of a recommendation decreases, the platform may increase more placements of the recommendation to hopefully increase the actual conversion of the recommendation. As an example, a ranking of recommendations to be placed to one or more users can be dynamically adjusted based on respective calibrated conversion metrics of the recommendations, and the order or cost of placing of these recommendations can be adjusted based on the ranking.

In some implementations, the techniques described can update the calibrated conversion metric for the recommendations by updating the bias, for example, dynamically or from time to time. In some implementations, some or all of the operations in the example process 300 can be repeated, for example, as another time instance. For example, at a different time instance (e.g., the third day of the predetermined seven-day prediction period), a third number of recommendations from the first number of recommendations can be determined, where each of the third number of recommendations has a return time within a second time period and the second time period is longer than and covers the first time period. For example, the system 100 determines P recommendations from the N recommendations based on their return times predicted at 304, where each of the P recommendations has a return time within, for example, three days. P is an integer larger than 0 and smaller than or equal to M. In some implementations, an updated bias is determined based on the first number of recommendations and the third number of recommendations. For example, the third number of recommendations (i.e., a number of recommendations having a return time before or at the updated current time point (e.g., within three days)) is P. In this case, the system 100 determines, at the bias calculator 104, the updated bias as a ratio of the first number of recommendations divided by the third number of recommendations, that is, $bias = \frac{N}{P}$. In some implementations, the calibrated conversion metric is updated with the updated bias. For example, the system 100 updates, at the calibrator 105, the calibrated conversion metric with updated bias $\frac{N}{P}$, and obtains an updated predicted conversion metric (e.g., update *pvr*')*.* It should be noted that, in this case, the value of the *convert* should be updated to the total number of recommendations already converted at the updated current time point (e.g., a total number of recommendations that are already converted within the first three days of the seven days). In some implementations, the one or more recommendation strategies for the first number of recommendations are adjusted based on the updated predicted conversion metric. For example, the system 100 adjusts, at the strategy manager 106, the one or more recommendation strategies for the N recommendations based on the update *pvr'.* Thereby, the techniques described achieve real-time updating for the calibrated conversion metric of the recommendations, so as to dynamically calibrate the conversion metric of the recommendations. As a result, the recommendation strategy for the recommendations can also be dynamically adjusted based on the updated calibrated conversion metric, reducing the strategy misalignment caused by the delay in return time of the recommendation conversion.

In some implementations, the techniques described can improve the calibration accuracy for the predicted conversion, for example, by utilizing a trained return time model to predict return times for a first number of recommendations and determining a second number of recommendations from the first number of recommendations based on the predicted return times. In this case, the cumulative deviation of the model can be significantly reduced, improving the system capability to capture the trend of the actual conversion of the recommendations and improving the accuracy and income of recommendation. In some implementations, the techniques described can also realize real-time calibration by determining a bias based on the first number of recommendations and the second number of recommendations, and determining, based on the bias, a calibrated conversion metric for the first number of recommendations within a predefined time period. In particular, the bias can be updated at any time during the delivery process of the recommendations, and thus avoid the inaccurate delivery strategy caused by the delay of the return time of the recommendations.

FIG. 4 is an example computer or computer-implemented-system 400. The system 400 can be used for the operations described in association with the implementations described herein, for example, as a data processing apparatus or server of a platform for predicting conversion data of recommendations. For example, the system 400 may be included in computing devices of the one or more online components and/or the one or more offline components. The system 400 includes a processor 410, a memory 420, a storage device 430, and an input/output device 440. The components 410, 420, 430, and 440 are interconnected using a system bus 450. The processor 410 is capable of processing instructions for execution within the system 400. In some implementations, the processor 410 is a single-threaded processor. The processor 410 is a multi-threaded processor. The processor 410 is capable of processing instructions stored in the memory 420 or on the storage device 430 to display graphical information for a user interface on the input/output device 440.

The memory 420 stores information within the system 400. In some implementations, the memory 420 is a computer-readable medium. The memory 420 can be a volatile memory unit or a non-volatile memory unit. The storage device 430 is capable of providing mass storage for the system 400. The storage device 430 is a computer-readable medium. The storage device 430 may be a floppy disk device, a hard disk device, an optical disk device, or a tape device. The input/output device 440 provides input/output operations for the system 400. The input/output device 440 includes a keyboard and/or pointing device. The input/output device 440 includes a display unit for displaying graphical user interfaces.

In this specification the term "engine," "collector," "sampler," "manager," "calibrator," or "calculator" will be used broadly to refer to a software-based system or subsystem that can perform one or more specific functions. Generally, an engine (or a collector, a sampler, a manager, a calibrator, a calculator) will be implemented as one or more software modules or components, installed on one or more computers in one or more locations. In some cases, one or more computers will be dedicated to a particular engine (or collector, sampler, manager, calibrator, calculator); in other cases, multiple engines (or collectors, samplers, managers, calibrators, calculators) can be installed and running on the same computer or computers.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any disclosure or on the scope of what may be claimed, but rather as descriptions of features that may be specific to particular embodiments of particular disclosures. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method (300), comprising:
receiving feature data of a first number of recommendations (302);
predicting return times for the first number of recommendations by utilizing a trained return time model based on the feature data (304);
determining a second number of recommendations from the first number of recommendations based on the return times (306), wherein each of the second number of recommendations has a return time within a first time period;
determining a bias based on the first number of recommendations and the second number of recommendations (308);
determining, based on the bias, a calibrated conversion metric for at least one of the first number of recommendations within a predefined time period, wherein the predefined time period is different from the first time period (310); and
adjusting a recommendation strategy for the first number of recommendations based on the calibrated conversion metric (312).

2. The computer-implemented method (300) of claim 1, wherein the recommendation strategy comprises at least one of: a ranking strategy, a billing strategy, or a bidding strategy.

3. The computer-implemented method (300) of claim 1, further comprising:
determining a third number of recommendations from the first number of recommendations, wherein each of the third number of recommendations has a return time within a second time period, the second time period is longer than and covers the first time period;
determining an updated bias based on the first number of recommendations and the third number of recommendations;
updating the calibrated conversion metric with the updated bias; and
adjusting the recommendation strategy for the first number of recommendations based on the updated calibrated conversion metric.

4. The computer-implemented method (300) of claim 1, wherein the feature data comprises features corresponding to at least one of: an identity of the recommendation, an identity of a provider of the recommendation, a category of the recommendation, a placement time slot for the recommendation, a geographic location corresponding to the recommendation, or a platform for placing the recommendation.

5. The computer-implemented method (300) of claim 1, wherein the trained return time model is generated by performing operations comprising:
obtaining a set of training data from past recommendations, wherein the set of training data comprising: feature data of the past recommendations, first data related to times of placing the past recommendations, and second data related to return times of the past recommendations;
performing a binning operation on the set of the training data to obtain a discrete return time distribution;
inputting the feature data of the past recommendations and the discrete return time distribution to a neural network model; and
training the neural network model to obtain the trained return time model.

6. The computer-implemented method (300) of claim 5, wherein the neural network model is trained with softmax and cross-entropy loss function.

7. The computer-implemented method (300) of claim 5, wherein performing a binning operation on the set of the training data to obtain a discrete return time distribution comprises:
obtaining return time samples based on differences between the first data and the second data; and
performing the binning operation on the return time samples to divide the return time samples into a predetermined number of time intervals, so as to obtain the discrete return time distribution.

8. The computer-implemented method (300) of claim 1, wherein predicting return times for the first number of recommendations by utilizing a trained return time model based on the feature data comprises, for each of the first number of recommendations:
inputting feature data of the each of the first number of recommendations to the trained return time model to obtain a return time distribution of the each of the first number of recommendations, wherein the return time distribution comprises probabilities of return times falling into different time intervals; and
performing a sampling operation on a random process according to the return time distribution to obtain a respective return time of the each of the first number of recommendations.

9. The computer-implemented method (300) of claim 1, wherein determining a bias based on the first number of recommendations and the second number of recommendations comprises:
determining the bias as a ratio of the first number of recommendations divided by the second number of recommendations.

10. The computer-implemented method (300) of claim 1, wherein determining, based on the bias, a calibrated conversion metric for at least one of the first number of recommendations within a predefined time period comprises:
determining a predicted conversion metric for each of the first number of recommendations within the predefined time period;
determining an expected conversion of the first number of recommendations within the predefined time period based on a summation of a predicted conversion metric for each of the first number of recommendations;
determining an actual conversion of the first number of recommendations within the first time period based on recommendations that have actual return times within the first time period;
determining a calibration term based on the bias, the expected conversion of the first number of recommendations within the predefined time period, and the actual conversion of the first number of recommendations within the first time period; and
determining the calibrated conversion metric based on a weighted summation of a predicted conversion metric for the at least one of the first number of recommendations within the predefined time period and the calibration term, and
wherein adjusting a recommendation strategy for the first number of recommendations based on the calibrated conversion metric comprises:
adjusting the recommendation strategy for the first number of recommendations based on the weighted summation of the predicted conversion metric for the at least one of the first number of recommendations within the predefined time period and the calibration term.

11. A computer-readable storage media storing one or more instructions that, when executable by one or more computers, cause the one or more computers to perform the computer-implemented method (300) of any of claims 1-10.

12. A computer-implemented system, comprising:
one or more computers; and
one or more computer memory devices interoperably coupled with the one or more computers and having computer-readable storage media storing one or more instructions that, when executed by the one or more computers, perform the computer-implemented method (300) of any of claims 1-10.
